Europäisches Patentamt

European Patent Office

Office européen des brevets

(11) Veröffentlichungsnummer: **0 266 520**
**B1**

# EUROPÄISCHE PATENTSCHRIFT

(45) Veröffentlichungstag der Patentschrift:
03.01.90

(21) Anmeldenummer: **87113355.9**

(22) Anmeldetag: **12.09.87**

(51) Int. Cl.⁴: **B65G 1/04**, B66F 9/14

(54) **Regalanlage.**

(30) Priorität: **03.11.86 DE 3637414**

(43) Veröffentlichungstag der Anmeldung:
**11.05.88 Patentblatt 88/19**

(45) Bekanntmachung des Hinweises auf die Patenterteilung:
**03.01.90 Patentblatt 90/1**

(84) Benannte Vertragsstaaten:
**BE CH FR GB LI NL SE**

(56) Entgegenhaltungen:
DE-A- 1 456 514
DE-U- 8 133 578
US-A- 3 556 329
US-A- 4 570 806

(73) Patentinhaber: **Neuhäuser, Helmut, Dipl.-Ing.,
Scharnhorststrasse 16, D-4670 Lünen(DE)**

(72) Erfinder: **Neuhäuser, Helmut, Dipl.-Ing.,
Scharnhorststrasse 16, D-4670 Lünen(DE)**
Erfinder: **Grossefeld, H.-Wilhelm, Kettelbötel 89,
D-4773 Möhnesee 14(DE)**

(74) Vertreter: **Honke, Manfred, Dr. et al, Patentanwälte
Andrejewski, Honke & Partner
Theaterplatz 3 Postfach 10 02 54, D-4300 Essen 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Regalanlage mit nebeneinander angeordneten Regalen mit einer Mehrzahl von übereinander angeordneten Regalfächern mit jeweils beidseitig Auflagerprofilen für in die Regalfächer einlagerbare Paletten, mit einer entlang der Regale verfahrbaren Beschick- und Entnahmevorrichtung mit zumindest einem Hubwerk für in die Regalfächer einfahrbare bzw. ausfahrbare Beschick- und Entnahmeholme, wobei die Paletten beidseitig mit der Palettenoberseite fluchtende, von den Beschick- und Entnahmeholmen unterfahrbare Auflagerschenkel aufweisen, die Beschick- und Entnahmeholme an höhenverfahrbaren Kragarmen der Beschick- und Entnehmevorrichtung in die Regalfächer einfahrbar bzw. ausfahrbar gelagert sind und die Kragarme Antriebseinrichtungen für die Beschick- und Entnahmeholme aufweisen.

Diese Regalanlage verlangt eine schrittweise Ein- und Auslagerung der Paletten. Das gleiche gilt für flächenförmige Lagergüter. Insoweit ist diese Regalanlage weiter entwicklungsfähig. – Hier setzt die Erfindung ein.

Im übrigen ist eine Regalanlage bekannt, bei welcher schalenartige Lagerbehälter in die Regalfächer eingelagert werden. Für diese Lagerbehälter ist eine Beschick- und Entnahmevorrichtung verwirklicht, die im wesentlichen teleskopierende und in die Regalfächer einfahrbare Lagerholme aufweist. Die teleskopierenden Lagerholme sind flaschenzugartig mittels Kettensträngen miteinander verbunden, welche ihrerseits über Rollen geführt sind. Dadurch wird eine synchrone Einfahr- und Ausfahrbewegung für die Lagerholme erreicht (vgl. US-A 4 570 806).

Ferner kennt man eine beidseitig ausfahrbare Ladeplattform. Diese Ladeplattform weist eine obere Gabel und eine diese aufnehmende untere Gabel auf, außerdem eine Antriebskette für die obere Gabel und einen aus einer Doppelkette und einer Verzahnung zusammengesetzten Antrieb für die untere Gabel. Zum Antrieb der endlosen Kette sind Kettenräder und zum Antrieb der Doppelkette Kettenradpaare vorgesehen. Der Ausfahrweg der oberen Gabel steht in einem bestimmten Verhältnis zum Ausfahrweg der unteren Gabel. Dieses Verhältnis ergibt sich aus dem Verhältnis der Kettenraddurchmesser (vgl. DE-A 1 456 514).

Der Erfindung liegt die Aufgabe zugrunde, eine Regalanlage der eingangs beschriebenen Art zu schaffen, die sich durch eine beschleunigte Ein- und Auslagerung der Paletten in die Regalfächer auszeichnet.

Diese Aufgabe löst die Erfindung bei einer gattungsgemäßen Regalanlage dadurch, daß die Beschick- und Entnahmeholme jeweils in Holmlängsrichtung von einer Transportkette umgeben sind, daß die Transportketten zumindest auf der Holmoberseite geführt und mittels an den Holmenden gelagerter Kettenritzel auf die Holmunterseite umgelenkt sind und daß die freien Enden der Transportketten unterhalb der Beschick- und Entnahmeholme in von den Beschick- und Entnahmeholmen unabhängigen Festpunkten fixiert sind. – Diese Maßnahmen der Erfindung haben zur Folge, daß die Transportketten auf den Beschick- und Entnahmeholmen beim Einfahren bzw. Ausfahren der Beschick- und Entnahmeholme in die Regalfächer eine gegenüber diesen Beschick- und Entnahmeholmen erhöhte Relativbewegung in Einfahr- und Ausfahrrichtung ausführen. Da die in die Regalfächer einzulagernden bzw. auszulagernden Paletten nicht länger auf den Beschick- und Entnahmeholmen unmittelbar aufliegen, sondern auf den sie umgebenden Transportketten, werden die Paletten im Zuge des Einlagerungs- bzw. Auslagerungsvorganges mit erhöhter Geschwindigkeit in die betreffenden Regalfächer eingefahren bzw. ausgefahren. Sofern die Transportketten die Beschick- und Entnahmeholme vollständig umgeben, wird praktisch eine doppelte Einfahr- und Ausfahrgeschwindigkeit für die Paletten erreicht. Denn die Einfahr- und Ausfahrgeschwindigkeit der Beschick- und Entnahmeholme addiert sich mit der Umlaufgeschwindigkeit der Transportketten auf den Beschick- und Entnahmeholmen. Da für die Kettenritzel kein selbständiger Antrieb vorgesehen ist, entspricht die Kettengeschwindigkeit praktisch der Holmgeschwindigkeit. Im Ergebnis wird eine beschleunigte Ein- und Auslagerung der Paletten in die Regalfächer erreicht.

Weitere bevorzugte Merkmale der Erfindung sind im folgenden aufgeführt. So lehrt die Erfindung, daß die Transportketten als Laschenketten ausgebildet und zwischen den Kettenritzeln auf Kettenrollen gelagert und/oder in Führungsrillen geführt sind. In der Ausführungsform als Laschenketten weisen die Transportketten eine hinreichende Auflagerfläche für die Auflagerschenkel der Paletten auf. Darüber hinaus wird aufgrund der Lagerung der Transportketten eine leichtgängige Relativbewegung in bezug auf die Beschick- und Entnahmeholme erreicht. Vorzugsweise sind die freien Enden der Transportketten bei in Ausgangsstellung befindlichen Beschick- und Entnahmeholmen im Bereich der Holmmitte unmittelbar unterhalb der Beschick- und Entnahmeholme und dicht bei dicht fixiert. Dadurch wird einerseits tatsächlich eine Einfahr- bzw. Ausfahrgeschwidigkeit für die aufliegenden Paletten erreicht, welche praktisch doppelt so groß wie die Holmgeschwindigkeit ist. Ferner ist der Einfahrweg bzw. Ausfahrweg optimiert und entspricht nahezu der Transportkettenlänge.

Im folgenden wird die Erfindung anhand einer lediglich ein Ausführungsbeispiel darstellenden Zeichnung näher erläutert; es zeigen:

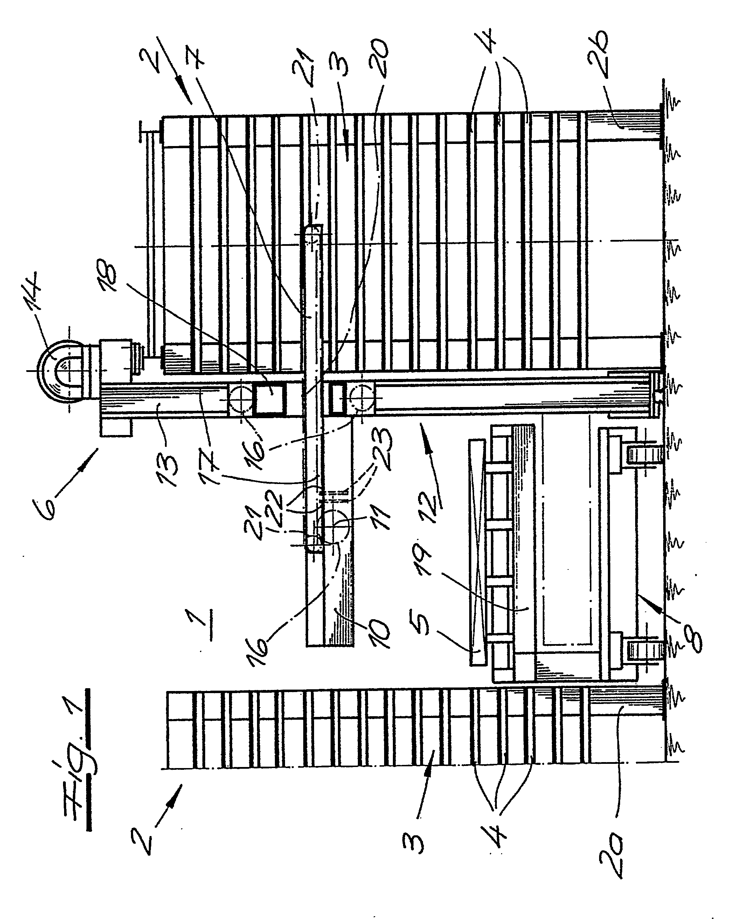

Fig. 1 eine erfindungsgemäße Regalanlage in schematischer Seitenansicht,

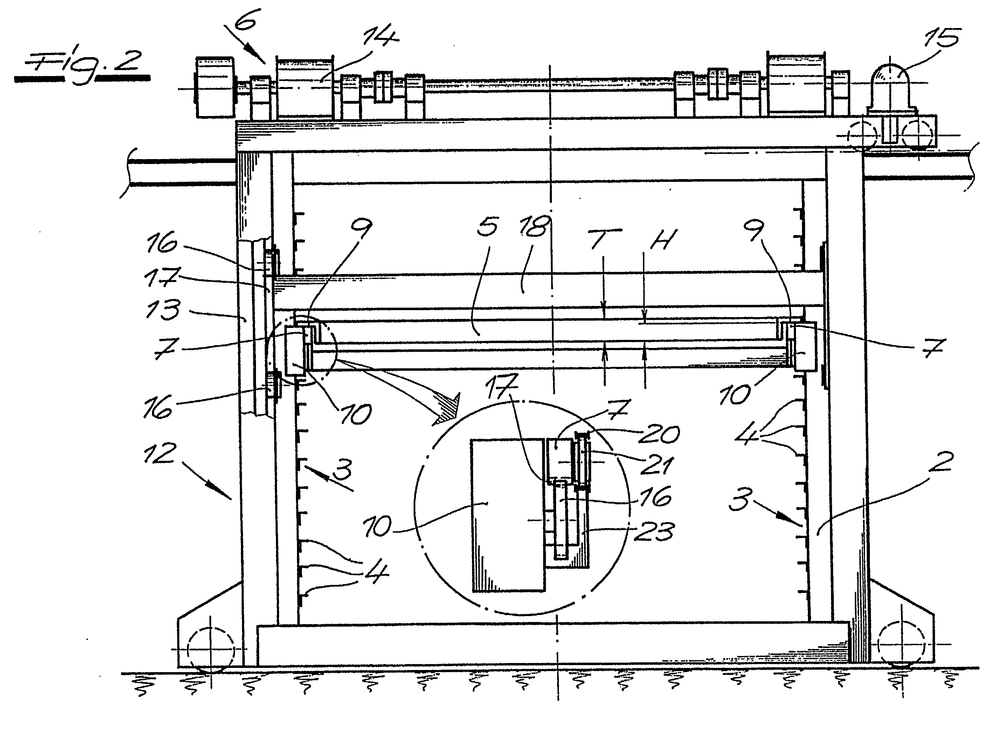

Fig. 2 den Gegenstand nach Fig. 1 in schematischer Frontansicht und teilweise im Vertikalschnitt,

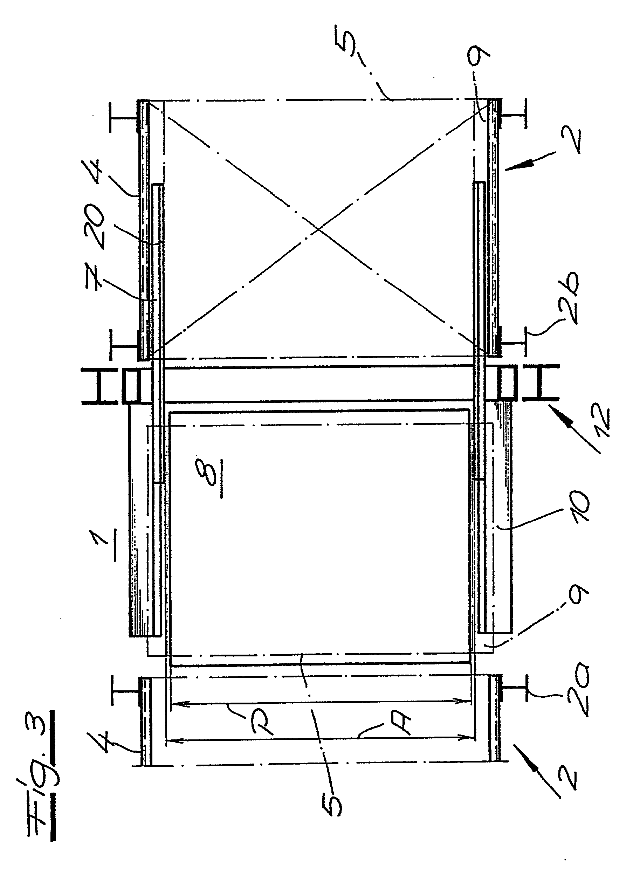

Fig. 3 eine Aufsicht auf den Gegenstand nach Fig. 1, und

Fig. 4 eine Palettenübergabe zwischen den Regalfächern zwei sich unter Bildung eines Regalganges gegenüberliegenden Regalen.

In den Figuren ist eine Regalanlage mit nebeneinander und unter Bildung eines Regalganges 1 gegenüber angeordneten Regalen 2 mit einer Mehrzahl von übereinander angeordneten Regalfächern 3 mit jeweils beidseitig Auflagerprofilen 4 für in die Regalfächer 3 einlagerbare Paletten 5 dargestellt. Diese Regalanlage weist ferner eine entlang der Regale 2 verfahrbare Beschick- und Entnahmevorrichtung 6 mit zumindest einem Hubwerk für in die Regalfächer 3 einfahrbare bzw. ausfahrbare Beschick- und Entnahmeholme 7 auf, ferner einen Palettenübergabewagen 8 für den An- und Abtransport der mittels der Beschick- und Entnahmeholme 7 von dem Palettenübergabewagen 8 abnehmbaren bzw. ablegbaren Paletten bzw. Lagergut.

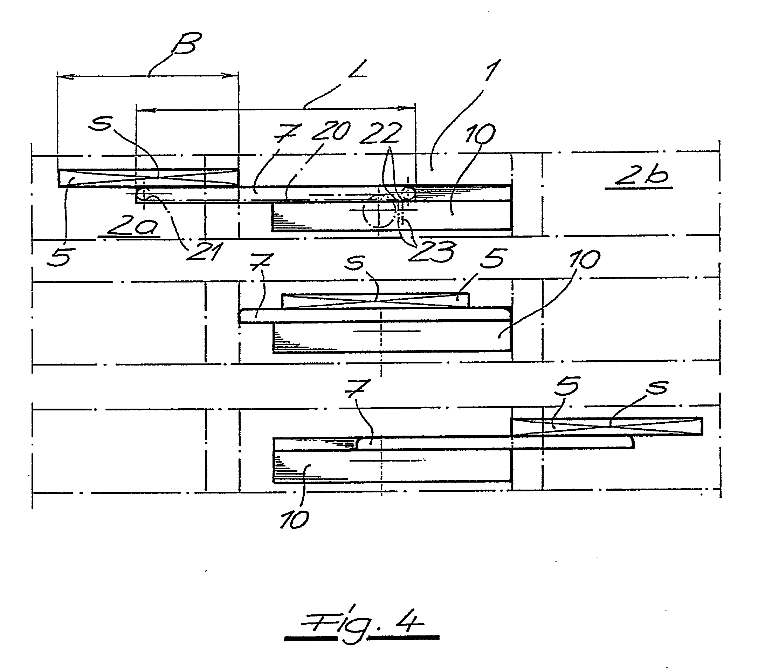

Die Paletten 5 weisen beidseitig mit der Palettenoberseite fluchtende, von den Beschick- und Entnahmeholmen 7 unterfahrbare Auflagerschenkel auf. Die Beschick- und Entnahmeholme 7 sind an höhenverfahrbaren Kragarmen 10 der Beschick- und Entnahmevorrichtung 6 in die Regalfächer 3 einfahrbar bzw. ausfahrbar gelagert. Die Kragarme 10 weisen Antriebseinrichtungen 11 für die Beschick- und Entnahmeholme 7 auf. Die Paletten 5 sind als Kassetten ausgebildet, wobei die Höhe H der Beschick- und Entnahmeholme 7 geringer als die Kassettentiefe T gewählt ist, so daß die Paletten bzw. Kassetten unter Minimierung des Totraumes übereinander angeordnet werden können. Denn der sonst für Beschick- und Entnahmewagen oder Gabelzinken erforderliche Manipulationszwischenraum kann nunmehr entfallen. Die Beschick- und Entnahmevorrichtung 6 weist einen unmittelbar vor den Regalen 2 verfahrbaren Rahmen 12 mit vertikalen Führungsprofilen 13 und Antriebseinrichtungen 14 für die Kragarme 10 auf. Die Kragarme und die daran geführten Beschick- und Entnahmeholme 7 kragen zu der den Regalfächern 3 abgewandten Seite vor, befinden sich also bei gegenüber angeordneten Regalen 2 in dem dann gebildeten Regalgang 1. Der Rahmen 12 ist auf seiner einen Seite zusätzlich auf den Regalen 2 geführt und dort mit einer Antriebseinrichtung 15 ausgerüstet, die aus einem Antriebsmotor mit Ritzel und einer Zahnstange bestehen kann. Die Kragarme 10 und die Beschick- und Entnahmeholme 7 weisen eine die Breite B der Paletten 5 bzw. Kassetten geringfügig übersteigende Länge L auf, wobei die Beschick- und Entnahmeholme 7 bis über den Schwerpunkt S der eingelagerten Paletten 5 hinaus in die Regalfächer 3 einfahrbar sind. Die Antriebseinrichtungen 11, 14 besitzen auch in diesem Fall Antriebsmotoren und davon angetriebene Reibräder oder Ritzel 16, wobei die Ritzel in Zahnstangen 17 oder Zahnstangenprofile der Beschick- und Entnahmeholme 7 sowie der Führungsprofile 13 eingreifen. Ferner sind die Beschick- und Entnahmeholme 7 an den Kragarmen 10 geführt in unter Bildung des Regalganges 1 beidseitig der Beschick- und Entnahmevorrichtung 6 angeordnete Regale bzw. Regalfächer 3 einfahrbar und ausfahrbar. Die Beschick- und Entnahmeholme 7 sind jeweils in Holmlängsrichtung von einer Transportkette 20 umgeben. Die Transportketten 20 sind zumindest auf der Holmoberseite geführt und mittels an den Holmenden gelagerter Kettenritzel 21 auf die Holmunterseite umgelenkt. Die freien Enden 22 der Transportketten sind unterhalb der Beschick- und Entnahmeholme 7 in von den Beschick- und Entnahmeholmen 7 unabhängigen Festpunkten 23 fixiert, beispielsweise an den Kragarmen 10. Dadurch führen die Transportketten 20 beim Einfahren bzw. Ausfahren der Beschick- und Entnahmeholme 7 in die Regalfächer 3 eine gegenüber den Beschick- und Entnahmeholmen 7 erhöhte Relativbewegung in Einfahr- bzw. Ausfahrrichtung auf. Tatsächlich wird die Einlager- bzw. Auslagergeschwindigkeit der auf den Transportketten 20 aufliegenden Paletten 5 nahezu verdoppelt. Jedenfalls lassen sich die Paletten 6 beschleunigt einlagern bzw. auslagern, beispielsweise aus den Regalfächern 3 des einen Regals 2a in die Regalfächer 3 eines anderen gegenüberstehenden Regals 2b übergeben. Dieser Auslagerungs- und Einlagerungsvorgang bzw. Übergabevorgang ist in Fig. 4 dargestellt und läßt die Relativbewegung der Transportketten 20 gegenüber den Beschick- und Entnahmeholmen 7 erkennen. Die Transportketten 20 sind als Laschenketten ausgebildet und zwischen den Kettenritzeln 21 auf Kettenrollen gelagert und/oder in Führungsrillen geführt, was im einzelnen nicht gezeigt ist. Die freien Enden 22 der Transportketten 20 sind bei in Ausgangsstellung befindlichen Beschick- und Entnahmeholmen 7 im Bereich der Holmmitte unmittelbar bzw. unterhalb der Beschick- und Entnahmeholme 7 fixiert.

Die Kragarme 10 sind von einer zwischen den Führungsprofilen 13 hochfahrbaren Traversenkonstruktion 18 getragen, wobei der Abstand A der Kragarme 10 größer als die Länge P des Palettenübergabewagens 8 gewählt ist. Dadurch lassen sich die Kragarme 10 mit den Beschick- und Entnahmeholmen 7 beidseitig des Palettenübergabewagens 8 so tief absenken, daß die Palette 5 bzw. das Lagergut aus einer Kassette auf den Palettenübergabewagen 8 abgesetzt wird. Der Palettenübergabewagen 8 weist ein zu den Regalen 2 hin offenes C-förmiges Fahrgestell 19 auf, läßt sich dadurch bei abgesenkten Kragarmen 10 bzw. Beschick- und Entnahmeholmen 7 längs der Regalanlage verfahren, zumal sich die abgesenkten Kragarme 10 bzw. Beschick- und Entnahmeholme 7 im Freibereich des C-förmigen Fahrgestells 19 befinden.

## Patentansprüche

1. Regalanlage mit nebeneinander angeordneten Regalen (2) mit einer Mehrzahl von übereinander angeordneten Regalfächern (3) mit jeweils beidseitig Auflagerprofilen (4) für in die Regalfächer (3) einlagerbare Paletten (5), mit einer entlang der Regale (2) verfahrbaren Beschick- und Entnahmevorrichtung (6) mit zumindest einem Hubwerk für in die Regalfächer (3) einfahrbare bzw. ausfahrbare Beschick- und Entnahmeholme (7), wobei die Paletten (5) beidseitig mit der Palettenoberseite fluchtende, von den Beschick- und Entnahmeholmen (7) unterfahrbare Auflagerschenkel (9) aufweisen, die Beschick- und Entnahmeholme (7) an höhenverfahrbaren Kragarmen (10) der Beschick- und Entnahmevorrichtung (6) in die Regalfächer (3) einfahrbar bzw. ausfahrbar gelagert sind und die Kragarme (10) Antriebseinrichtungen (11) für die Beschick-und Entnahmeholme (7) aufweisen, dadurch gekennzeichnet, daß die Beschick- und Entnahmeholme (7) jeweils in Holmlängsrichtung von einer Transportkette (20) umgeben sind, daß die Transportketten (20) zumindest auf der Holmoberseite geführt und mittels an den Holmenden gelagerter Kettenritzel (21) auf die Holmunterseite umgelenkt sind und daß die freien Enden (22) der Transportketten unterhalb der Beschick- und Entnahmeholme (7) in von den Beschick- und Entnahmeholmen (7) unabhängigen Festpunkten (23) fixiert sind.

2. Regalanlage nach Anspruch 1, dadurch gekennzeichnet, daß die Transportketten (20) als Laschenketten ausgebildet und zwischen den Kettenritzeln (21) auf Kettenrollen gelagert und/oder in Führungsrillen geführt sind.

3. Regalanlage nach einem der Ansprüche 1 oder 2, dadurch gekennzeichnet, daß die freien Enden (22) der Transportketten (20) bei in Ausgangsstellung befindlichen Beschick- und Entnahmeholmen (7) im Bereich der Holmmitte unmittelbar unterhalb der Beschick- und Entnahmeholme (7) fixiert sind.

## Claims

1. A shelving system with sets of shelves (2) arranged side by side with a plurality of shelf compartments (3) arranged one above the other with support profile sections (4) on both sides of each for pallets that can be stored in the shelf compartments (3), with a loading and removal applicance (6) transportable along the side of the set of shelves (2) with at least one lifting appliance for loading and removal spars (7) movable into and out of the shelf compartments (3), in which the pallets (5) possess on both sides support flanks (9), aligned with the upper surface of the pallet, below which the loading and removal spars (7) can pass, the loading and removal spars (7) run on vertically-displaceable cantilevers (10) of the loading and removal appliance (6) and can be moved into or out of the shelf compartments (3), and the cantilevers (10) possess driving mechanisms (11) for the loading and removal spars (7), characterized in that each of the loading and removal spars (7) is emcompassed in the direction of length of the spar by a transport chain (20), that the transport chains (20) are at least guided on the upper surface of the spar and are returned on the lower surface of the spar by means of chain pinions (21) running in bearings on the ends of the spar, and that the free ends (22) of the transport chains are secured to fixed points (23) below the loading and removal spars (7) and independent of them.

2. A shelving system according to Claim 1, characterized in that the transport chains (20) are constructed as sprocket chains and between the chain pinions (21) run on chain rollers and/or are guided in guidance grooves.

3. A shelving system according to one of Claims 1 or 2, characterized in that when the loading and removal spars (7) are in the starting position the free ends (22) of the transport chains (20) are fixed directly below the loading and removal spars (7) at the position of the centre of the spar.

## Revendications

1. Installation d'emmagasinage avec des rayonnages (2) disposés côte avec une pluralité de casiers (3) superposés avec chaque fois sur leurs deux côtés des profilés de support (4) pour des palettes (5) pouvant être entreposées dans les casiers (3), avec un dispositif (6) de chargement et de déchargement circulant le long des rayonnages (2) avec au moins un mécanisme élévateur pour les bras (7) de chargement et de déchargement pouvant être engagés dans les casiers (3) et extraits de ces casiers, les palettes (5) présentant des deux côtés des ailes de support (9) alignées avec la face supérieure de la palette, sous lesquelles peuvent s'engager les bras (7) de chargement et de déchargement, ces bras (7) de chargement et de déchargement étant portés par des bras (10) en console, mobiles en hauteur, du dispositif (6) de chargement et de déchargement en pouvant être engagés dans les casiers (3) et extraits de ces casiers, et les bras (10) en console présentant des dispositifs (11) d'entraînement des bras (7) de chargement et de déchargement, caractérisée en ce que les bras (7) de chargement et de déchargement sont entourés chaque fois dans leur sens longitudinal par une chaîne (20) de transport; en ce que les chaînes (20) de transport sont guidées tout au mons sur la face supérieure du bras et renvoyées sous la face inférieure du bras par des pignons de chaîne (21) montés sur les extrémités du bras; et en ce que les extrémités libres (22) des chaînes de transport sont fixées sur des points fixes (23) indépendants des bras (7) de chargement et de déchargement, en dessous desdits bras (7) de chargement et de déchargement.

2. Installation d'emmagasinage selon la revendication 1, caractérisée en ce que les chaînes de transport (20) sont sous la forme de chaînes à éclisses et reposent entre les pignons de chaîne (21) sur des galets de guidage et/ou sont guidées dans des rainures de guidage.

3. Installation d'emmagasinage selon la revendication 1 ou 2, caractérisée en ce que les extrémités libres (22) des chaînes de transport (20) sont, lorsque les bras (7) de chargement et de déchargement sont en position initiale, fixées dans la région médiane du bras, directement sous les bras (7) de chargement et de déchargement.

Fig. 1

EP 0 266 520 B1

Fig.2

Fig. 3

_Fig. 4_